Europäisches Patentamt

European Patent Office

Office européen des brevets

(11) Veröffentlichungsnummer: **0 247 027**
A1

## (12) EUROPÄISCHE PATENTANMELDUNG

(21) Anmeldenummer: 87890106.5

(22) Anmeldetag: 20.05.87

(51) Int. Cl.³: **A 01 G 17/08**

(30) Priorität: 22.05.86 AT 1367/86

(43) Veröffentlichungstag der Anmeldung:
25.11.87 Patentblatt 87/48

(84) Benannte Vertragsstaaten:
AT DE FR GB IT NL

(71) Anmelder: Praskac, Franz, Ing.
Praskacstrasse 101
A-3430 Tulln(AT)

(72) Erfinder: Praskac, Franz, Ing.
Praskacstrasse 101
A-3430 Tulln(AT)

(74) Vertreter: Atzwanger, Richard Dipl.Ing.
Mariahilfer Strasse 1c
A-1060 Wien(AT)

(54) Vorrichtung zur Stützung von Pflanzen oder von Teilen derselben.

(57) Vorrichtung zur Stützung von Pflanzen (5) oder von Teilen derselben, insbesondere zur Stützung von verholzen Pflanzenstämmen, mit einem einen zumindest teilkreisförmigen Querschnitt aufweisenden Auflageteil (1) für die Pflanze, welcher an den freien Enden seiner Schenkel mit Umbiegungen (11) ausgebildet ist und welcher mittels einer dessen verstärkt ausgebildete Rückenwölbung (12) durchsetzenden Befestigungseinrichtung, wie einem Bügel (4) oder einem Bolzen, mit einer Stützeinrichtung, z.B. einem Spanndraht oder einem Pfahl verbindbar ist. Dabei sind die beiden Schenkelenden des Auflageteiles (1) mittels eines in den Umbiegungen (11) verrastbaren elastischen Zugelementes, z.B. mittels eines Gummiringes (3), miteinander verbindbar, wobei die Pflanze (7) bzw. der Pflanzenteil vom Auflageteil (1) und dem elastischen Zugelement (3) vollständig umschlossen ist.

EP 0 247 027 A1

Die Erfindung betrifft eine Vorrichtung zur Stützung von Pflanzen oder von Teilen derselben, insbesondere zur Stützung von verholzten Pflanzenstämmen, mit einem einen zumindest teilkreisförmigen Querschnitt aufweisenden Auflageteil für die Pflanze, welcher an den freien Enden seiner Schenkel mit Umbiegungen ausgebildet ist und welcher mittels einer dessen verstärkt ausgebildete Rückenwölbung durchsetzenden Befestigungseinrichtung, wie einem Bügel oder einem Bolzen, mit einer Stützeinrichtung, z.B. einem Spanndraht oder einem Pfahl, verbindbar ist.

Aus der CH-PS 570 756 ist eine Haltevorrichtung für Zweige oder Äste bekannt, die aus mindestens einem aus Federstahl gefertigten, im Querschnitt kreisförmigen geschlitzten Bügel, welcher dazu dient, einen Zweig oder einen Ast zu umschließen, und aus einer Tragvorrichtung für diesen Bügel, mittels welcher er an einer Stützeinrichtung befestigbar ist, besteht. Dabei ist der Bügel an seinen freien Enden mit Umbiegungen ausgebildet, durch welche das Einführen der Zweige oder Äste in diesen erleichtert wird.

Diese bekannte Haltevorrichtung entspricht jedoch nicht allen an derartige Vorrichtungen gestellten Anforderungen. Soferne nämlich der die Zweige oder Äste umschließende Bügel eine nur geringe Spannkraft aufweist, werden die von diesem umschlossenen Zweige oder Äste insbesondere aufgrund von starken Windkräften aus diesem herausgedrückt, wodurch die angestrebte Stützfunktion nicht mehr gewährleistet wird. Soferne demgegenüber der Bügel mit einer so großen Spannkraft ausgebildet ist, daß die Zweige oder Äste bei jeglichen auftretenden Kräften aus diesem nicht gelöst werden können, umschließt er die Zweige oder Äste mit einer derartigen Haltekraft, daß bei weiterem Wachstum der Zweige oder Äste an diesen Einschnürungen bedingt werden. Dies trifft insbesondere auch für verholzte Stämme zu, welche in der Regel gestützt werden sollen.

Der Erfindung liegt demnach die Aufgabe zugrunde, eine Stützvorrichtung zu schaffen, durch welche die dieser bekannten Stützvorrichtung und ähnlichen Stützvorrichtungen anhaftenden Nachteile vermieden werden. Dies wird erfindungsgemäß dadurch erzielt, daß die beiden Schenkelenden des Auflageteiles mittels eines in den Umbiegungen verrastbaren elastischen Zugelementes, z.B. mittels eines Gummiringes, miteinander verbindbar sind, wobei die Pflanze bzw. der Pflanzenteil vom Auflageteil und dem elastischen Zugelement vollständig umschlossen ist.

Vorzugsweise ist dabei der Auflageteil im Querschnitt angenähert halbkreisförmig ausgebildet. Nach einem weiteren vorzugsweisen Merkmal ist die verstärkt ausgebildete Rückenwölbung mit einer quer zur Achse des Auflageteils ausgerichteten Durchbrechung zur Aufnahme eines mit einem Spanndraht verrastbaren Bügels ausgebildet. Dabei kann die verstärkt ausgebildete Rückenwölbung an ihrer der Auflagefläche für die Pflanze abgewandten Seite mit einer Abflachung versehen sein, an welcher der Spanndraht oder der Pfahl zur Anlage kommt.

Zur Schonung der durch diese Vorrichtung gestützten Pflanzen kann diese in Kombination mit einem Schutzvlies verwendet werden, von welchem die im Auflageteil befindliche Pflanze umgeben ist. Zudem kann zur Erzielung des gleichen Zweckes der Auflageteil beliebig große Breiten aufweisen.

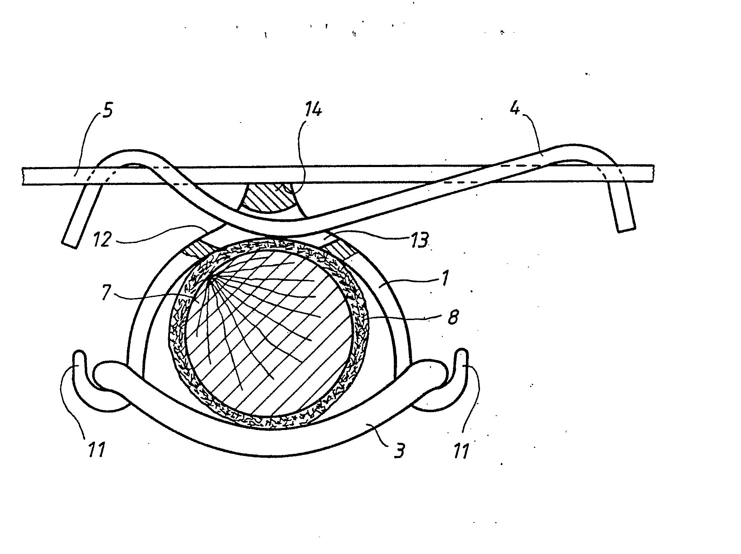

Der Gegenstand der Erfindung ist nachstehend anhand eines in der Zeichnung dargestellten Ausführungsbeispiels näher erläutert. In der Zeichnung ist eine erfindungsgemäße Stützvorrichtung in Draufsicht und teilweise aufgebrochen dargestellt.

Die erfindungsgemäße Stützvorrichtung besteht aus einem im Querschnitt angenähert halbkreisförmigen Auflageteil 1, der aus Federstahl oder aus Kunststoff gefertigt ist. Die freien Enden dieses Auflageteiles 1 sind mit Umbiegungen 11 ausgebildet, in welche ein Zugelement, beispielsweise ein Gummiring 3, eingehängt werden kann. Der mittlere Bereich 12 dieses Auflageteiles 1, welcher verstärkt ausgebildet ist, ist mit einer Durchbrechung 13 versehen, in welche von einem Bügel 4 durchsetzt ist. Mittels dieses Bügels 4 kann der Auflageteil 1 an einem Spanndraht 5 befestigt werden. Dabei ist der Bereich der Rückenwölbung 12 mit einer Fläche 14 ausgebildet, an welcher der Spanndraht 5 zur Anlage kommt.

Eine erfindungsgemäße Vorrichtung wird derart verwendet, daß der Auflageteil 1 an einem Pflanzenteil, insbesondere an einen Pflanzenstamm 7, zur Anlage gebracht wird, wobei der Pflanzenstamm 7 im Auflagebereich mit einem Schutzvlies 8 umgeben wird. In weiterer Folge wird in die beiden Umbiegungen 11 des Auflageteiles 1 ein elastisches Zugelement, beispielsweise ein Gummiring 3, eingehängt. Durch den Auflageteil 1 einerseits und durch das Zugelement 3 andererseits wird der Pflanzenteil 7 vollständig umschlossen und derart durch die Stützvorrichtung gehalten.

Da das Zugelement 3 elastisch ausgebildet ist, wird gewährleistet, daß der Pflanzenteil 7 in seiner Entwicklung nicht beeinträchtigt wird. Dessen ungeachtet wird gewährleistet, daß auch bei Auftreten von großen Kräften der Pflanzenteil 7 von der Stützvorrichtung nicht gelöst werden kann. Schließlich wird der Auflageteil 1 mittels des diesen durchsetzenden Bügels 4 am Spanndraht 5 befestigt. Nach einer Ausführungsvariante kann der Auflageteil 1 mittels eines Bolzens an einem Pfahl befestigt werden.

87890106.5
0247027

Patentansprüche

1. Vorrichtung zur Stützung von Pflanzen oder von Teilen derselben, insbesondere zur Stützung von verholzten Pflanzenstämmen, mit einem einen zumindest teilkreisförmigen Querschnitt aufweisenden Auflageteil für die Pflanze, welcher an den freien Enden seiner Schenkel mit Umbiegungen ausgebildet ist und welcher mittels einer dessen verstärkt ausgebildete Rückenwölbung durchsetzenden Befestigungseinrichtung, wie einem Bügel oder einem Bolzen, mit einer Stützeinrichtung, z.B. einem Spanndraht oder einem Pfahl, verbindbar ist, dadurch gekennzeichnet, daß die beiden Schenkelenden des Auflageteiles (1) mittels eines in den Umbiegungen (11) verrastbaren elastischen Zugelementes, z.B. mittels eines Gummiringes (3), miteinander verbindbar sind, wobei die Pflanze (7) bzw. der Pflanzenteil vom Auflageteil (1) und dem elastischen Zugelement (3) vollständig umschlossen ist.

2. Vorrichtung nach Anspruch 1, dadurch gekennzeichnet, daß der Auflageteil (1) im Querschnitt angenähert halbkreisförmig ausgebildet ist.

3. Vorrichtung nach einem der Ansprüche 1 und 2, dadurch gekennzeichnet, daß die verstärkt ausgebildete Rückenwölbung (12) mit einer quer zur Achse des Auflageteiles (1) ausgerichteten Durchbrechung (13) zur Aufnahme eines mit einem Spanndraht (5) verrastbaren Bügels (4) ausgebildet ist.

4. Vorrichtung nach Anspruch 3, dadurch gekennzeichnet, daß die verstärkt ausgebildete Rückenwölbung (12) an ihrer der Auflagefläche für die Pflanze (7) abgewandten Seite mit einer Abflachung (14) ausgebildet ist, an welcher der Spanndraht (5) oder der Pfahl zur Anlage kommt.

5. Vorrichtung nach einem der Ansprüche 1 bis 4, dadurch gekennzeichnet, daß ein Schutzvlies (8) vorgesehen ist, von welchem die im Auflageteil (1) befindliche Pflanze (7) umgeben ist.

6. Vorrichtung nach einem der Ansprüche 1 bis 4, dadurch gekennzeichnet, daß der Auflageteil (1) eine relativ große Breite aufweist.

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-C- 570 319 (AMANN) <br> * Insgesamt * <br><br> --- | 1-3 | A 01 G 17/08 |
| A | CH-A- 319 144 (CHAMBOVEY) <br> * Insgesamt * <br><br> --- | 1 | |
| A | GB-A- 624 761 (SMITH) <br> * Seite 3, Zeilen 73-127; Figuren 1,2 * <br><br> ----- | 5 | |

| RECHERCHIERTE SACHGEBIETE (Int. Cl 4) |
|---|
| A 01 G |

Der vorliegende Recherchenbericht wurde für alle Patentansprüche erstellt.

| Recherchenort | Abschlußdatum der Recherche | Prüfer |
|---|---|---|
| DEN HAAG | 21-08-1987 | HERYGERS J.J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82